(19) Europäisches Patentamt
European Patent Office
Office européen des brevets

(11) EP 4 194 428 A1

(12) # EUROPEAN PATENT APPLICATION

(43) Date of publication:
**14.06.2023 Bulletin 2023/24**

(21) Application number: **21213767.3**

(22) Date of filing: **10.12.2021**

(51) International Patent Classification (IPC):
***C04B 40/00*** *(2006.01)*

(52) Cooperative Patent Classification (CPC):
(C-Sets available)
**C04B 40/0039;** C04B 2103/0079 (Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Construction Research & Technology GmbH**
**83308 Trostberg (DE)**

(72) Inventors:
- **BERRES, Antonia**
**83308 Trostberg (DE)**
- **KLEIN, Johannes**
**83308 Trostberg (DE)**
- **MAZANEC, Oiver**
**83308 Trostberg (DE)**
- **SACHSENHAUSER, Bernhard**
**83308 Trostberg (DE)**
- **WOHLHAUPTER, Thomas**
**83308 Trostberg (DE)**
- **PHYFFEROEN, Alain**
**83308 Trostberg (DE)**

(74) Representative: **Lorenz, Klaus Uwe**
**Master Builders Solutions Deutschland GmbH EB/IP**
**Dr.-Albert-Frank-Straße 32**
**83308 Trostberg (DE)**

(54) **HYDROCOLLOID PARTICLE SUSPENSION USEFUL AS RHEOLOGICAL MODIFIER FOR CEMENTITIOUS APPLICATIONS, USE OF A HYDROCOLLOID PARTICLE SUSPENSION**

(57) A hydrocolloid particle suspension comprises a concentration of at least 0.5 g/100 g of hydrocolloid particles, and a stabilizing additive containing at least one polyoxyalkylene moiety of 3 to 150 consecutive oxyalkylene units, wherein the at least one polyoxyalkylene moiety comprises at least 25 wt.-% of oxyethylene moieties, based on the total oxyalkylene moieties comprised in the stabilizing additive. The suspension contains less than 80 wt.-% of water and is useful as rheological modifier for cementitious applications. In the hydrocolloid particle suspension, the hydrocolloid particles are stabilized against premature swelling. The suspension exhibits adequate viscosity for ease of handling and dosage and is shelf-stable.

(52) Cooperative Patent Classification (CPC): (Cont.)

C-Sets
**C04B 40/0039, C04B 18/24, C04B 20/008,
C04B 24/003, C04B 24/267, C04B 24/383;
C04B 40/0039, C04B 18/24, C04B 20/008,
C04B 24/246, C04B 24/32, C04B 24/383;
C04B 40/0039, C04B 18/24, C04B 20/008,
C04B 24/2647, C04B 24/383, C04B 24/42;
C04B 40/0039, C04B 18/24, C04B 20/008,
C04B 24/32, C04B 24/38, C04B 2103/50**

## Description

The present invention relates to a hydrocolloid particle suspension useful as rheological modifier for cementitious applications, the use of a hydrocolloid particle suspension.

It is known that dispersants are added to aqueous slurries of cementitious binders for improving their workability, i.e. spreadability, pumpability or flowability. Such admixtures are capable of preventing the formation of solid agglomerates and of dispersing the particles already present and those newly formed by hydration and in this way improving the workability. In order to convert the pulverulent binders into a freshly mixed processible form, substantially more mixing water is required than would be necessary for the subsequent hydration and hardening process. The voids formed in the concrete body by the excess of water, which subsequently evaporates, lead to poor mechanical strength and resistance. In order to reduce the excess proportion of water at a predetermined processing consistency and/or to improve the workability at a predetermined water/binder ratio, admixtures are used which are generally referred to as water-reducing agents or plasticizers. Those, which allow for high levels of water reduction, are known as high range water reducers or superplasticizers.

Superplasticizers provide flowability but do not necessarily impart resistance to segregation and bleeding. Viscosity modifying agents, also known as rheological modifiers or rheology modifying agents (RMA), may be added to the concrete mixture. These additives are usually water-soluble hydrocolloids and function by increasing the apparent viscosity of the mix water. This enhanced viscosity prevents the sag of aggregates and facilitates uniform flow of the particles and reduces bleeding, or free water formation, on the fresh paste surface. RMA are typically used with water reducers in highly flowable mixtures to keep the mixture together. They can disperse and/or suspend components of the concrete thereby assisting in holding the concrete mixture together. Thus, these additives enhance the cohesion and stability of cement based systems.

RMA are usually natural polymers or derivatives thereof that enhance the water retention capability, the yield value and plastic viscosity of cementitious compositions and control bleeding and segregation.

Welan gum, diutan gum and cellulose ether derivatives, such as methylcellulose and hydroxypropylmethylcellulose are by far the most used RMA for cementitious compositions.

Welan gum (CAS No. 96949-22-3) is an anionic polysaccharide with excellent thermal stability and retention of viscosity at elevated temperatures. The welan molecule consists of tetrasaccharide repeating units, each carrying a single sugar branch of either L-mannose or L-rhamnose.

Diutan gum (CAS No. 125005-87-0) is a natural high molecular weight gum produced by controlled aerobic fermentation. The repeating unit is comprised of a six-sugar unit. The backbone is made of D-glucose, D-glucuronic acid, D-glucose and L-rhamnose and the side chain of two L-rhamnose units.

Diutan gum possesses the highest dose efficiency among the known RMA. Welan gum and diutan gum are more pseudoplastic than cellulose ethers and effectively prevent particles sag and bleeding at lower concentrations.

As RMA are conventionally used at very low dosages, there is a need for verifying that RMA are incorporated into the concrete mix at the correct dosage; and, secondly, to ensure that they are properly intermixed to avoid lump formation and to achieve substantially uniform dispersal throughout the concrete mix.

Powdery additives in which the RMA is diluted with a pulverulent auxiliary have been suggested. These powdery additives are, however, often associated with dust problems. Therefore, liquid formulations are generally preferred due to the ease of handling and dosage.

Liquid admixtures based on aqueous solutions of RMA contain very low concentrations of RMA, typically not higher than 0.3%: At higher concentrations, the viscosity of the admixture would be too high to be handled properly.

US 6,117,226 discloses a stable hydrocolloid composition in which a hydrocolloid, preferably welan gum, is uniformly dispersed in a superplasticizer such as sulfonated naphthalene, sulfonated melamine, modified lignosulfate, their derivatives and mixtures thereof. This mixture is then stabilized by a microbially-produced cellulose fiber composition.

These liquid admixtures enabled construction workers to avoid having to handle powdery RMA additives and facilitated their dispersal within the mix. Nevertheless, there remains a need for liquid RMA compositions, in particular those having higher concentrations of RMA. Advantageously, the liquid RMA compositions exhibit adequate viscosity for ease of handling and dosage. Moreover, the liquid RMA compositions are shelf-stable which is intended to mean that their viscosity does not significantly increase during storage.

According to the present invention, this object is achieved by a hydrocolloid particle suspension, comprising

a concentration of at least 0.5 g/100 g, preferably at least 1.0 g/100 g, more preferably at least 1.5 g/100 g, of hydrocolloid particles, and

a stabilizing additive containing at least one polyoxyalkylene moiety of 3 to 150 consecutive oxyalkylene units, wherein the at least one polyoxyalkylene moiety comprises at least 25 wt.-% of oxyethylene moieties, based on the total oxyalkylene moieties comprised in the stabilizing additive,

wherein the suspension contains less than 80 wt.-%, preferably 5 to 70 wt.-%, more preferably 40 to 60 wt.-%, of

water, and
wherein the suspension is useful as rheological modifier for cementitious applications.

In the hydrocolloid particle suspension of the present invention, the hydrocolloid particles are stabilized against premature swelling. Without wishing to be bound by theory, the stabilizing additive, together with the limited water content of the hydrocolloid particle suspension reduces the water activity within the external phase of the suspension, thereby preventing swelling and dissolution of the hydrocolloid particles.
This advantageously results in the liquid hydrocolloid particle suspension exhibiting a low viscosity. Only after incorporation of the suspension into a cementitious composition, rapid swelling occurs which is promoted by the alkaline environment therein.
Suitable rheology modifiers are selected from, for example:

- cellulose ethers such as methylcellulose, hydroxyethylcellulose, hydroxypropylmethylcellulose, carboxymethylcellulose, carboxymethylhydroxyethylcellulose, methylhydroxyethylcellulose, hydroxymethylethylcellulose, ethylcellulose, hydroxylethylpropylcellulose etc.
- starches such as amylopectin, amylose, seagel, starch acetates, starch hydroxyethyl ethers, ionic starches, long-chain alkylstarches, dextrins, amine starches, phosphates starches, and dialdehyde starches
- proteins such as zein, collagen and casein
- synthetic polymers such as polyvinylpyrrolidone, polyvinylmethyl ether, polyvinyl acrylic acids, polyvinyl acrylic acid salts, polyacrylimides, polylactic acid polyacrylates, polyvinyl alcohol etc.
- exopolysaccharides, also referred to as "biopolymers" such as diutan gum, welan gum, xanthan gum, rhamsan gum, gellan, dextran, pullulan, curdlan etc.
- marine gums such as algin, agar, seagel, carrageenan etc.
- plant exudates such as locust bean, gum arabic, gum Karaya, tragacanth, Ghatti etc.
- seed gums such as Guar, locust bean, okra, psyllium, mesquite etc.
- starch-based gums such as ethers, esters, and related derivatized compounds.

In preferred embodiments, the hydrocolloid is selected from diutan gum, welan gum, xanthan gum, rhamsan gum, cellulose ethers, and mixtures thereof.
In an especially preferred embodiment, the hydrocolloid is diutan gum due to its high dosage efficiency.
When added to cementitious compositions, diutan gum exhibits a high apparent viscosity at low shear rates that resulted from entanglement and intertwining of the polymer, whereas at high shear rates the viscosity decreases because of the alignment of the polymer along the direction of the flow and thus enhancing fluidity.
Suitably, the hydrocolloid particle suspension comprises the hydrocolloid particle preferably in an amount in the range of 0.5 to 5.0 g/100 g, preferably 1.0 to 4.0 g/100 g, more preferably 1.5 to 3.5 g/100 g, relative to the total weight of the hydrocolloid particle suspension.
The hydrocolloid particle suspension of the invention comprises a stabilizing additive. The stabilizing additive, in combination with the limited water content of the inventive hydrocolloid particle suspension, stabilizes the hydrocolloid particles against premature swelling. Stabilization against premature swelling denotes that the suspension is shelf-stable and does not gel for at least 2 months, preferably 6 months, at ambient temperature.
Suitably, the hydrocolloid particle suspension comprises the stabilizing additive in an amount in the range of 25 to 99.5 wt.-%, preferably 35 to 45 wt.-%, relative to the total weight of the hydrocolloid particle suspension.
The stabilizing additive contains at least one polyoxyalkylene moiety of 3 to 150 consecutive oxyalkylene units. The oxyalkylene moieties comprise at least 25 wt.-%, preferably at least 35 wt.-%, more preferably at least 60 wt.-% of oxyethylene moieties, based on the total oxyalkylene moieties comprised in the stabilizing additive. Generally, the stabilizing additive may be a linear polymer embodying 3 to 150 consecutive oxyalkylene units or may comprise a skeleton having side chains of 3 to 150 consecutive oxyalkylene units.
In an embodiment, the stabilizing additive is a polyoxyalkylene glycol comprising at least 25 wt.-% of oxyethylene moieties, in particular polyoxyethylene glycol (PEG). The polyoxyethylene glycol comprises 3 to 150, preferably 5 to 100, more preferably 6 to 25 consecutive oxyethylene units.
Generally, the polyoxyalkylene glycol may have at its termini a free OH moiety or may be etherified at one or both termini with an alcohol, e.g. a $C_1$ to $C_4$ alcohol, preferably methanol or ethanol.
In an embodiment, the stabilizing additive is an aminoalkylene phosphonic acid having a polyether chain, e.g., of the formula below

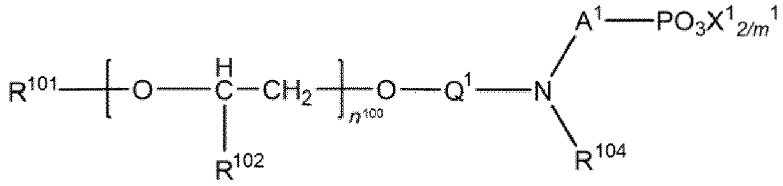

wherein

$n^{100}$ is an integer of between 1 and 100;
$R^{101}$ is H or alkyl comprising 1 to 24 carbon atoms, preferably 1 to 4 carbon atoms;
$R^{102}$ is H or alkyl comprising 1 to 4 carbon atoms;
$Q^1$ is a straight or branched alkylene group comprising 2 to 10 carbon atoms;
$A^1$ is an alkylene or alkylidene group comprising 1 to 6 carbon atoms, or an arylene group;
$X^1$ is H, alkyl comprising 1 to 5 carbon atoms or a mono- or divalent cation, such that
$m^1$ is 1 when $X^1$ represents H, alkyl comprising 1 to 5 carbon atoms or a monovalent cation, and $m^1$ is 2 when $X^1$ represents a divalent cation;
$R^{104}$ is H, alkyl comprising 1 to 6 carbon atoms, aryl or $-A^2-PO_3\ X^2_{2/m2}$ where:
$A^2$ is alkylene or alkylidene comprising 1 to 6 carbon atoms, or arylene,
$X^2$ represents H, alkyl comprising 1 to 5 carbon atoms or a mono- or divalent cation, such that $m^2$ is 1 when $X^2$ represents H, alkyl comprising 1 to 5 carbon atoms or a monovalent cation, and $m^2$ is 2 when $X^2$ represents a divalent cation.

Such an aminoalkylene phosphonic acid having a polyether chain are described in WO 94/08913 or US 9,012,589 and are available as Optima 100 (available from Chryso).

In an embodiment, the stabilizing additive is a comb polymer having a carbon-chain backbone with anionic and/or anionogenic groups and polyoxyalkylene side chains. Herein, the term "anionic groups" especially relates to carboxylate groups, phosphate groups, and phosphonate groups; and the term "anionogenic groups" relates to groups which are capable of releasing said anionic groups under the conditions prevailing inside the construction composition. Release of an anionic group can occur via different mechanisms, such as neutralization of an acidic group with a base, or by saponification of a hydrolysable ester. In many cases, methyloxy carbonyl groups and lower hydroxyalkyloxy carbonyl groups, for example hydroxyl-$C_2$-$C_3$-alkyloxy carbonyl groups, attached to a tertiary carbon atom in the polymeric backbone, are readily hydrolysable. For the methyl esters, it is believed to be due to the low amount of steric hindrance by the methyl group; for the lower hydroxyalkyl esters, it is believed that the neighboring hydroxyl group assists in the hydrolysis of the ester bond. The polyoxyalkylene side chains comprise 3 to 150 consecutive oxyalkylene units of which at least 25 wt.-% are oxyethylene moieties, based on the total oxyalkylene moieties comprised in the stabilizing additive.

In an embodiment, the proportion by weight of polyoxyalkylene moieties in the comb polymer is at least 55 wt.-%, preferably at least 65 wt.-%. For example, the proportion by weight of polyoxyalkylene moieties in the comb polymer is 55 to 95 wt.-%, more preferably 68 to 93 wt.-%, in particular 87 to 91 wt.-%, based on the total weight of the comb polymer. The "proportion by weight of polyoxyalkylene moieties" is intended to mean the mass of polyoxyalkylene moieties divided by the total mass of the comb polymer assuming all anionic groups being present in their protonated form and/or all anionogenic groups being present in their protonated or in their saponified and protonated form, respectively.

The comb polymers may, for example, be polycarboxylate ethers or phosphorylated polycondensates, as explained in more detail below.

These compound classes are known per se and act as dispersants in cementitious compositions.

To some degree, the RMA affects the slump of the cement paste. To maintain workability, a dispersant has to be included or the dosage of a dispersant has to be increased. Hydrocolloid particle suspensions of the invention wherein the stabilizing additive is a comb polymer can be used in cementitious compositions without the necessity of adjusting the recipe or mix design. This is because the hydrocolloid particles are accompanied by a component acting as a dispersant.

In an embodiment, the comb polymer has a charge density of 0.3 to 3.0 meq/g, preferably 0.7 to 2.0 meq/g, more preferably 0.8 to 1.2 meq/g, of polymer, assuming all anionogenic groups being fully ionized. The milliequivalent number refers to anionic groups and anionic groups releasable from anionogenic groups contained in the comb polymer, assuming that all anionic groups are in neutralized form. The calculation of the milliequivalent number is known per se.

In an embodiment, the stabilizing additive is a comb polymer comprising

- structural units selected from formula (I) [any reference to formula (I) hereinafter is meant to refer to formulae (Ia),

(Iaa), (Ib), (Ic), and/or (Id)], and

- structural units selected from formula (II) [any reference to formula (II) hereinafter is meant to refer to formulae (IIa), (IIb), (IIc) and/or (IId)].

Suitably, the structural units of formulae (Ia), (Ib), (Ic) and/or (Id) may impart anionic and/or anionogenic groups and be identical or different both within individual polymer molecules and between different polymer molecules.

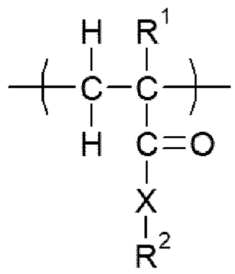

(Ia)

wherein

$R^1$ is H, $C_1$-$C_4$ alkyl, $CH_2COOH$ or $CH_2CO$-X-$R^{3A}$, preferably H or methyl;
X is NH-($C_{n1}H_{2n1}$) or O-($C_{n1}H_{2n1}$) with n1 = 1, 2, 3 or 4, the nitrogen atom or the oxygen atom being bonded to the CO group;
$R^2$ is OM, $PO_3M_2$, or O-$PO_3M_2$;
$R^{3A}$ is $PO_3M_2$, or O-$PO_3M_2$;

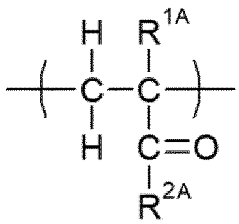

(Iaa)

wherein

$R^{1A}$ is H, $C_1$-$C_4$ alkyl, preferably H or methyl;
$R^{2A}$ is OM; or
$R^{1A}$ is H; and
$R^{2A}$ is O-$CH_3$, O-($C_{n3}H_{2n3}$)-OH with n3 = 2, 3 or 4, preferably n3 = 2 or 3

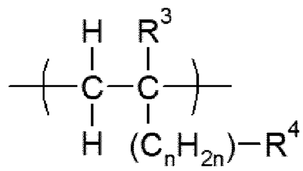

(Ib)

wherein

$R^3$ is H or $C_1$-$C_4$ alkyl, preferably H or methyl;
n is 0, 1, 2, 3 or 4;
$R^4$ is $PO_3M_2$, or O-$PO_3M_2$;

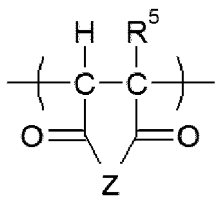

(Ic)

wherein

$R^5$ is H or $C_1$-$C_4$ alkyl, preferably H;
Z is O or $NR^7$;
$R^7$ is H, $(C_{n1}H_{2n1})$-OH, $(C_{n1}H_{2n1})$-$PO_3M_2$, $(C_{n1}H_{2n1})$-$OPO_3M_2$, $(C_6H_4)$-$PO_3M_2$, or $(C_6H_4)$-$OPO_3M_2$, and n1 is 1, 2, 3 or 4;

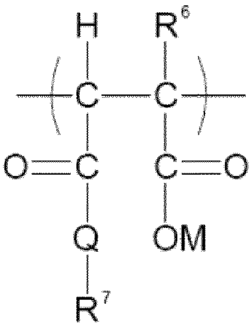

(Id)

wherein

$R^6$ is H or $C_1$-$C_4$ alkyl, preferably H;
Q is $NR^7$ or O;
$R^7$ is H, $(C_{n1}H_{2n1})$-OH, $(C_{n1}H_{2n1})$-$PO_3M_2$, $(C_{n1}H_{2n1})$-$OPO_3M_2$, $(C_6H_4)$-$PO_3M_2$, or $(C_6H_4)$-$OPO_3M_2$, n1 is 1, 2, 3 or 4; and

where each M independently is H or a cation equivalent.

Preferably, the comb polymer comprises structural units of the formula (Ia) wherein $R^1$ is H or methyl; and/or at least one structural unit of the formula (Ib) wherein $R^3$ is H or methyl; and/or at least one structural unit of the formula (Ic) wherein $R^5$ is H or methyl and Z is O; and/or at least one structural unit of the formula (Id) wherein $R^6$ is H and Q is O.

Preferably, the comb polymer comprises as structural units of the formula (Ia) wherein $R^1$ is H or methyl and $XR^2$ is OM or X is $O(C_nH_{2n})$ with n1 = 1, 2, 3 or 4, more particularly 2, and $R^2$ is O-$PO_3M_2$.

With particular preference, the structural unit of formula (Ia) is a methacrylic acid or acrylic acid unit, the structural unit of formula (Ic) is a maleic anhydride unit, and the structural unit of formula (Id) is a maleic acid or maleic monoester unit.

In the case that the monomers (I) are phosphoric esters or phosphonic esters, they may also include the corresponding diesters and triesters and also the monoester of diphosphoric acid. In general, these esters come about during the esterification of organic alcohols with phosphoric acid, polyphosphoric acid, phosphorus oxides, phosphorus halides or phosphorus oxyhalides, and/or the corresponding phosphonic acid compounds, alongside the monoester, in different proportions, as for example 5 to 30 mol-% of diester and 1 to 15 mol-% of triester and also 2 to 20 mol-% of the monoester of diphosphoric acid.

Suitably, the structural units of formulae (IIa), (IIb), (IIc) and/or (IId) impart polyether side chains and may be identical or different not only within individual polymer molecules but also between different polymer molecules. All structural units A as defined below may be identical or different both within individual polyether side chains and between different polyether side chains.

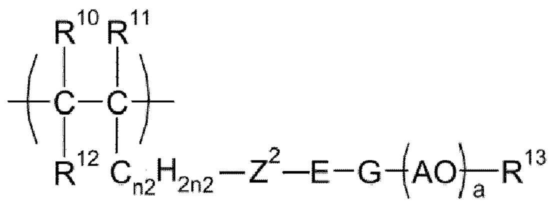

(IIa)

wherein

- $R^{10}$, $R^{11}$ and $R^{12}$ independently of one another are H or $C_1$-$C_4$ alkyl, preferably H or methyl;
- $Z^2$ is O or S;
- E is $C_2$-$C_6$ alkylene, cyclohexylene, $CH_2$-$C_6H_{10}$, 1,2-phenylene, 1,3-phenylene or 1,4-phenylene;
- G is O, NH or CO-NH; or
- E and G together are a chemical bond;
- A is $C_2$-$C_5$ alkylene or $CH_2CH(C_6H_5)$, preferably $C_2$-$C_3$ alkylene, more preferably $C_2$ alkylene;
- n2 is 0, 1, 2, 3, 4 or 5;
- a is an integer from 3 to 150;
- $R^{13}$ is H, an unbranched or branched $C_1$-$C_4$ alkyl group, $CO$-$NH_2$ or $COCH_3$;

Preferably, the structural unit of formula (IIa) is an alkoxylated isoprenyl unit, alkoxylated hydroxyethyl vinyl ether unit, alkoxylated hydroxybutyl vinyl ether unit, alkoxylated (meth)allyl alcohol unit or a vinylated methylpolyalkylene glycol unit, in each case preferably with an arithmetic average of 3 to 150 oxyalkylene groups.

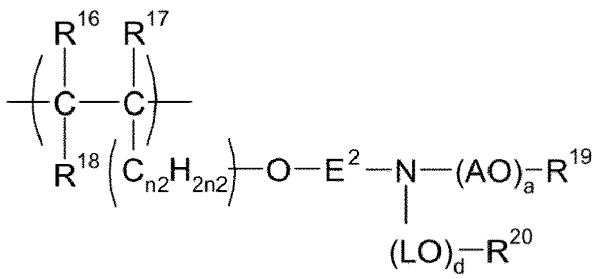

(IIb)

wherein

- $R^{16}$, $R^{17}$ and $R^{18}$ independently of one another are H or $C_1$-$C_4$ alkyl, preferably H;
- $E^2$ is $C_2$-$C_6$ alkylene, cyclohexylene, $CH_2$-$C_6H_{10}$, 1,2-phenylene, 1,3-phenylene, or 1,4-phenylene, or is a chemical bond;
- A is $C_2$-$C_5$ alkylene or $CH_2CH(C_6H_5)$, preferably $C_2$-$C_3$ alkylene, more preferably $C_2$ alkylene;
- n2 is 0, 1, 2, 3, 4 or 5;
- L is $C_2$-$C_5$ alkylene or $CH_2CH(C_6H_5)$, preferably $C_2$-$C_3$ alkylene, more preferably $C_2$ alkylene;
- a is an integer from 3 to 150;
- d is an integer from 3 to 150;
- $R^{19}$ is H or $C_1$-$C_4$ alkyl; and
- $R^{20}$ is H or $C_1$-$C_4$ alkyl;

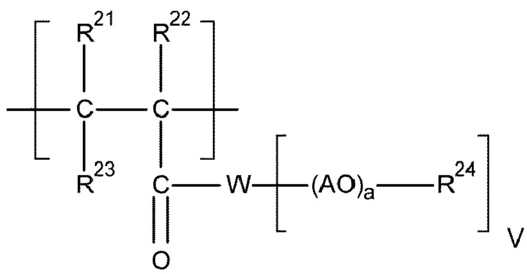

(IIc)

wherein

$R^{21}$, $R^{22}$ and $R^{23}$ independently are H or $C_1$-$C_4$ alkyl, preferably H;
W is O, $NR^{25}$, or is N;
V is 1 ifW = O or$NR^{25}$, andis2 ifW = N;
A is $C_2$-$C_5$ alkylene or $CH_2CH(C_6H_5)$, preferably $C_2$-$C_3$ alkylene, more preferably $C_2$ alkylene;
a is an integer from 3 to 150;
$R^{24}$ is H or $C_1$-$C_4$ alkyl;
$R^{25}$ is H or $C_1$-$C_4$ alkyl;

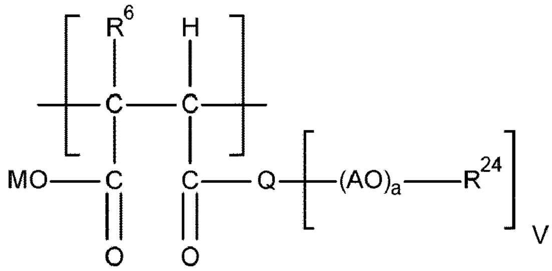

(IId)

wherein

$R^6$ is H or $C_1$-$C_4$ alkyl, preferably H;
Q is $NR^{10}$, N or O;
V is 1 if Q = O or $NR^{10}$ and is 2 if Q = N;
$R^{10}$ is H or $C_1$-$C_4$ alkyl;
$R^{24}$ is H or $C_1$-$C_4$ alkyl;
A is $C_2$-$C_5$ alkylene or $CH_2CH(C_6H_5)$, preferably $C_2$-$C_3$ alkylene, more preferably $C_2$ alkylene; and
a is an integer from 3 to 150;

where each M independently is H or a cation equivalent.

Besides the structural units of the formulae (I) and (II), the comb polymer may also comprise further structural units, which are derived from radically polymerizable monomers, such as hydroxyethyl methacrylate, hydroxypropyl methacrylate, (meth)acrylamide, $C_2$-$C_4$ alkyl acrylates, $C_1$-$C_4$ alkyl methacrylates, styrene, styrenesulfonic acid, 2-acrylamido-2-methylpropanesulfonic acid, (meth)allylsulfonic acid, vinylsulfonic acid, vinyl acetate, acrolein, N-vinylformamide, vinylpyrrolidone, (meth)allyl alcohol, isoprenol, 1-butyl vinyl ether, isobutyl vinyl ether, aminopropyl vinyl ether, ethylene glycol monovinyl ether, 4-hydroxybutyl monovinyl ether, (meth)acrolein, crotonaldehyde.

Suitably, the molar ratio of structural units (I) to structural units (II) varies from 1:3 to about 10:1, preferably 1:1 to 10:1, more preferably 2:1 to 6:1.

The comb polymer comprising the structural units (I) and (II) may be prepared by conventional methods, for example by free radical polymerization or controlled radical polymerization as, e.g., described in EP 0 894 811, EP 1 851 256, EP 2 463 314, and EP 0 753 488.

Suitably, such comb polymer has a weight-average molecular weight of 5000 to 200000 g/mol, preferably 10000 to 80000 g/mol, more preferably 20000 to 70000g/mol. The molecular weight is suitable determined using polyhydroxymethacrylate as a stationary phase, and an aqueous solution of $HCO_2NH_4$ (0.05 mol/L) and 20 vol.-% of methanol as a mobile phase. The molecular weight calibration is performed with polystyrene sulfonate standards for UV detectors (for polycondensates) and polyethylene oxide standards for RI detectors (for polycarboxylate ethers).

Preferably, the comb polymer comprises:

(a) at least one structural unit of the formula (IIa) wherein $R^{10}$ and $R^{12}$ are H, $R^{11}$ is H or methyl, E and G together are a chemical bond, A is $C_2$-$C_3$ alkylene, preferably $C_2$ alkylene, a is 3 to 150, and $R^{13}$ is H or an unbranched or branched $C_1$-$C_4$ alkyl group; and/or
(b) at least one structural unit of the formula (IIb) wherein $R^{16}$ and $R^{18}$ are H, $R^{17}$ is H or methyl, $E^2$ is an unbranched or branched $C_2$-$C_6$ alkylene group, A is $C_2$-$C_3$ alkylene, preferably $C_2$ alkylene, L is $C_2$-$C_3$ alkylene, a is an integer from 3 to 150, d is an integer from 3 to 150, $R^{19}$ is H or an unbranched or branched $C_1$-$C_4$ alkyl group, and $R^{20}$ is H or an unbranched or branched $C_1$-$C_4$ alkyl group; and/or
(c) at least one structural unit of the formula (IIc) wherein $R^{21}$ and $R^{23}$ are H, $R^{22}$ is H or methyl, A is $C_2$-$C_3$ alkylene, preferably $C_2$ alkylene, a is an integer from 3 to 150, and $R^{24}$ is H or an unbranched or branched $C_1$-$C_4$ alkyl group, preferably an unbranched or branched $C_1$-$C_4$ alkyl group; and/or
(d) at least one structural unit of the formula (IId) wherein $R^6$ is H, Q is O, V is 1, A is $C_2$-$C_3$ alkylene, preferably $C_2$ alkylene, and a is an integer from 3 to 150.

The comb polymer may comprise at least one structural unit of the formula (IIa) and/or (IIc).

The comb polymer may comprise structural units of the formulae (I) and (II), e.g. of the formulae (Ia) and (IIa), or of the formulae (Ia) and (IIc), or of the formulae (Ic) and (IIa), or of the formulae (Ia), (Ic) and (IIa).

Preferably, the comb polymer may comprise units of (I) and (II) according to embodiments 1 to 3 of the following table:

| # | (I) | (II) |
|---|---|---|
| 1 | hydroxyethyl acrylate phosphoric acid ester and/or hydroxyethyl methacrylate phosphoric acid ester | $C_1$-$C_4$ alkyl-polyethylene glycol acrylic acid ester and/or $C_1$-$C_4$ alkyl-polyethylene glycol methacrylic acid ester |
| 2 | acrylic acid and/or methacrylic acid | $C_1$-$C_4$ alkyl-polyethylene glycol acrylic acid ester and/or $C_1$-$C_4$ alkyl-polyethylene glycol methacrylic acid ester |
| 3 | acrylic acid and/or maleic acid | vinyloxy-$C_2$-$C_4$ alkylene-polyethylene glycol, allyloxy-polyethylene glycol, methallyloxy-polyethylene glycol and/or isoprenyloxy-polyethylene glycol |

More preferably, the comb polymer may comprise units of (I) and (II) according to embodiments 4 to 13 of the following table:

| # | (I) | (II) |
|---|---|---|
| 4 | hydroxyethyl methacrylate phosphoric acid ester | $C_1$-$C_4$ alkyl-polyethylene glycol methacrylic acid ester or polyethylene glycol methacrylic acid ester |
| 5 | methacrylic acid | $C_1$-$C_4$ alkyl-polyethylene glycol methacrylic acid ester or polyethylene glycol methacrylic acid ester |
| 6 | acrylic acid and/or maleic acid | vinyloxy-$C_2$-$C_4$ alkylene-polyethylene |
| | | glycol |
| 7 | acrylic acid and maleic acid | isoprenyloxy-polyethylene glycol |
| 8 | acrylic acid | vinyloxy-$C_2$-$C_4$ alkylene-polyethylene glycol |
| 9 | acrylic acid | isoprenyloxy-polyethylene glycol |
| 10 | acrylic acid | methallyloxy-polyethylene glycol |
| 11 | maleic acid | isoprenyloxy-polyethylene glycol |
| 12 | maleic acid | allyloxy-polyethylene glycol |

(continued)

| # | (I) | (II) |
|---|---|---|
| 13 | maleic acid | methallyloxy-polyethylene glycol |

The phosphorylated polycondensate is obtainable by a condensation reaction of

i) an aromatic compound having a phosphate moiety,
ii) an alkoxylated hydroxyaryl compound having a polyoxyalkylene chain with 3 to 130 oxyalkylene units, and
iii) formaldehyde,

in a weight ratio of i) : ii) of 2 : 98 to 40 : 60, preferably 5 : 95 to 30 : 70, more preferably 10 : 90 to 20 : 80.
The aromatic compound having a phosphate moiety i) may be represented by formula (III):

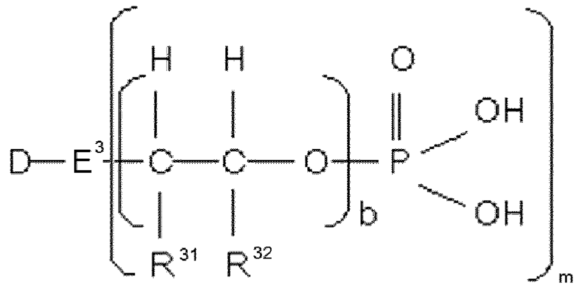

(III)

wherein, in formula (III),

D is a substituted or unsubstituted aromatic or heteroaromatic compound having 5 to 10 carbon atoms,
$E^3$ is N, NH or O,
m = 2 if $E^3$ = N and m = 1 if $E^3$ = NH or O,
$R^{31}$ and $R^{32}$, independently of one another, are identical or different and are represented by a branched or straight-chain $C_1$- to $C_{10}$-alkyl radical, $C_5$- to $C_8$-cycloalkyl radical, aryl radical, heteroaryl radical or H, and
b are identical or different and are represented by an integer from 0 to 300, preferably 1 to 10.

Suitably, moiety D is represented by phenyl, 2-hydroxy¬phenyl, 3-hydroxyphenyl, 4-hydroxyphenyl, 2-methoxyphenyl, 3-methoxyphenyl, 4-methoxyphenyl, naphthyl, 2-hydroxynaphthyl, 4-hydroxynaphthyl, 2-methoxy¬naphthyl, 4-methoxynaphthyl, preferably phenyl.
Preferably, moiety $E^3$ is represented by O.
Suitably, the substituents $R^{31}$ and $R^{32}$ may be chosen independently of one another and are preferably represented by H, methyl, ethyl or phenyl, more preferably by H or methyl, most preferably by H.
Suitably, b is an integer from 0 to 10, preferably 1 to 7, more preferably 1 to 5. The respective substituents, the length of which is defined by b, may consist of uniform building blocks, but a mixture of different building blocks may also be expedient. Furthermore, the substituents may each have the same chain length, b being represented by a number. As a rule, however, it will be expedient if mixtures having different chain lengths are present in each case so that the radicals of the monomers or structural units in the polycondensate have different numerical values for b.
The alkoxylated hydroxyaryl compound ii) is a hydroxyaryl compound having a polyoxyalkylene chain with 3 to 130, preferably 10 to 100, more preferably 25 to 40 oxyalkylene units.
Herein, the term "alkoxylated hydroxyaryl compound" denotes a compound having an aromatic core and at least one hydroxyl group directly attached to the aromatic core. The alkoxylated hydroxyaryl compound ii) may have one or more further substituents as long as the presence of such substituents does not interfere with the condensation reaction of the alkoxylated hydroxyaryl compound ii) and formaldehyde iii). In an embodiment, the hydroxyaryl compound ii) is selected from unsubstituted or monosubstituted phenol, and unsubstituted or monosubstituted naphthols. Suitably, the phenols, and/or naphthols may be monosubstituted with a substituent selected from alkyl groups and carboxylic groups. Suitable naphthols are selected from 1-naphthol and 2-naphthol. Suitable alkyl-substituted phenols are selected from ortho-cresol, meta-cresol and para-cresol.

The alkoxylated hydroxyaryl compounds ii) may be obtained by reaction of hydroxyaryl compounds with alkylene oxides such as ethylene oxide or propylene oxide. The alkylene oxides introduce one or more divalent oxyalkylene groups into the hydroxyaryl compounds, e.g. into the phenol molecule. Such alkylene oxide residue is then interposed between the phenolic hydroxyl group oxygen atom and its hydrogen atom.

Generally, such an alkoxylated compound may be a single compound. However, usually, it is a mixture of compounds in which the numbers of oxyalkylene groups in the compounds are present as a distribution. That is that the number of 3 to 130 oxyalkylene units per polyoxyalkylene chain represents an average value of oxyalkylene units per polyoxyalkylene chain.

In an embodiment, the alkoxylated hydroxyaryl compound ii) is an ethoxylated phenol. The term "ethoxylated phenol" denotes a hydroxyaryl compound that has been reacted with ethylene oxide to yield a polyoxyalkylene chain consisting of 100% oxyethylene units.

The aromatic compound having a phosphate moiety i) and the alkoxylated hydroxyaryl compound ii) are reacted in a weight ratio of i) : ii) of 95 : 5 to 60 : 40, preferably 85 : 15 to 60 : 40, more preferably 75 : 25 to 60 : 40.

Monomer component iii) is formaldehyde.

Suitably, the phosphorylated polycondensate has a weight-average molecular weight of 4000 g/mol to 150000 g/mol, preferably 5000 to 25000 g/mol, more preferably 5000 to 15000 g/mol.

The comb polymer may be used in its commercially available form, which is an aqueous product in the form of a solution, emulsion or dispersion with a solids content of 20 to 60 wt.-%, preferably 30 to 50 wt.-%.

In an embodiment, the hydrocolloid particle suspension additionally contains a structuring agent. Such structuring agents are believed to form spider-network like structures which efficiently trap the particles inside the network and thereby impart good suspending properties. By incorporating a structuring agent, floating-up or sedimentation of the hydrocolloid particles over time can effectively be prevented. Any resuspension by shaking or stirring prior to dosage can be dispensed with.

In an embodiment, the structuring agent is a cellulose insoluble fiber of the microfibrillated cellulose (MFC) or nanocellulose family. Microfibrillated cellulose is a term referring to cellulose microfibrils obtained from vegetal biomass or by fermentation in the case of bacterial cellulose (BC). Nanocellulose is a term referring to nano-structured cellulose. This may be either cellulose nanocrystal (CNC or NCC), cellulose nanofibers (CNF) also called nanofibrillated cellulose (NFC), or bacterial nanocellulose, which refers to nano-structured cellulose produced by bacteria. MFC is a material composed of cellulose microfibrils with cross section in the micrometer range and a length or several micrometers. The microfibrils are typically obtained from vegetal biomass after defibrillation treatment involving high shear mechanical treatment or a combination of chemical, enzymatic, and mechanical treatment. Examples of vegetal biomass from which MFC can be obtained are wood pulp, bagasse, beet pulp, citrus peel, and other cellulosic rich agricultural side stream. MFC can also be obtained from fermentation under suitable conditions to provide BC after isolation from fermentation media. Without being bound by theory, the width and length of bacterial cellulose fibrils can be adjusted by fermentation conditions including addition of chemicals.

CNF is a material composed of nanosized cellulose fibrils with a high aspect ratio (length to width ratio). Typical fibril widths are 5 to 100 nm with a wide range of lengths, typically several micrometers. The fibrils are isolated from any cellulose containing source including wood-based fibers such as pulp fibers through high-pressure, high temperature and high velocity impact homogenization, grinding or microfluidization. Nanocellulose may also be obtained from native fibers by an acid hydrolysis, giving rise to highly crystalline and rigid nanoparticles which are shorter (100 to 1000 nm) than the cellulose nanofibrils (CNF) obtained through homogenization, microfluidization or grinding routes. The resulting material is known as cellulose nanocrystal (CNC).

CELLULON ® R-88 and CELLULON ® L-88 (available from CP Kelco) are particularly preferred as structuring agent. CELLULON® L-27, R27, L93, R93, R25 and WL (available from CP Kelco) are also suitable structuring agents.

Suitably, the hydrocolloid particle suspension comprises the structuring agent in an amount in the range of 0.005 to 0.2 wt.-%, preferably 0.02 to 0.08 wt.-%, calculated as active substance relative to the total weight of the hydrocolloid particle suspension.

In an embodiment, the hydrocolloid particle suspension additionally contains a defoaming agent. Incorporation of a defoaming agent into the hydrocolloid particle suspension is beneficial to control the entrained air content in the hydrocolloid particle suspension.

Examples of defoaming agents are, but are not limited to:

- defoaming agents based on mineral or vegetable oils, fats and oils
- fatty acid esters
- chemicals having a hydroxyl group such as alcohols, preferably fatty alcohols
- phosphoric esters
- silicon-based defoaming agents
- polyoxyalkylene-based defoaming agents

- liquid hydrocarbons.

In an embodiment, the defoaming agent is selected from polyoxyalkylene-based defoaming agents, phosphoric esters and silicon-based defoaming agents.

Suitable examples of polyoxyalkylene-based defoaming agents include polyethylene glycol/polypropylene glycol (PEG/PPG) copolymers, polyoxyalkylene glycol fatty alcohol ethers, alkoxylated acetylenic diol surfactants, and polyoxypropylenepolyoxyethylene glycerol ethers. Generally, polyoxyalkylene-based defoaming agents contain less than 60 wt.-%, preferably less than 35 wt.-%, more preferably less than 25 wt.-% of oxyethylene moieties, based on the total oxyalkylene moieties comprised in the defoaming agent.

Suitable examples of phosphoric esters include tributyl phosphate, and triisobutyl phosphate.

Suitably, the hydrocolloid particle suspension comprises the defoaming agent in an amount in the range of 0.5 to 15 wt.-%, preferably 2 to 5 wt.-%, relative to the total weight of the hydrocolloid particle suspension.

Biocides can be incorporated into the hydrocolloid particle suspension in order to prevent growth of microorganisms. For example, polyhexamethylene biguanide, isothiazolones, isothiazolinones such as, e.g., 5-chloro-2-methyl-4-isothiazolin-3-one (CIT), 2-methyl-4-isothiazolin-3-one (MIT), or mixtures thereof can be used. Examples are the products from the Proxel® range from Arch UK Biocides or from the Acticide® range from Thor Chemie. Acticide MBS® is preferred as the biocide.

Suitably, the hydrocolloid particle suspension comprises the biocide in an effective amount.

In an embodiment, the hydrocolloid particle suspension exhibits a viscosity of 3500 mPa·s or less, preferably 2500 mPa·s or less, most preferably 1700 mPa·s, measured using a Brookfield viscosimeter with spindle LVS61 at 20 °C and 12 rpm.

In an embodiment, the hydrocolloid particle suspension exhibits no sedimentation and/or floating-up upon storage for 2 months.

The invention further relates to the use of a suspension as described above as rheology-modifying agent (RMA), more preferably as viscosity-enhancing agent for cementitious applications. More particularly, the suspension is used in order to prevent the sag of aggregates and to facilitate uniform flow of the particles and to reduce bleeding, or free water formation, on the fresh paste surface.

Herein, the term "cementitious applications" denotes applying the hydrocolloid particle suspension of the invention in a cementitious composition. Such "cementitious compositions" contain at least one cementitious binder and, mostly, a filler material such as sand and/or coarse aggregates.

In an embodiment, the cementitious binder comprises a cement selected from Portland cement, calcium aluminate cement and sulfoaluminate cement. In an embodiment, the construction composition comprises, the cementitious binder in an amount of 5 to 35 vol.-%, preferably 8 to 15 vol.-%, relative to the total amount of the construction composition.

Generally, the construction composition, in freshly mixed form, has a ratio of water to cementitious binder in the range of 0.2 to 1, preferably 0.35 to 0.7.

In an embodiment, the cementitious binder additionally comprises a supplementary cementitious material such as a latent hydraulic binder or a pozzolanic binder.

Generally, the "latent hydraulic binder" may be selected from industrial and/or synthetic slag, in particular from blast furnace slag, electrothermal phosphorous slag, steel slag and mixtures thereof. The "pozzolanic binder" may be selected from amorphous silica, preferably precipitated silica, fumed silica and microsilica, ground glass, metakaolin, aluminosilicates, fly ash, preferably brown-coal fly ash and hard-coal fly ash, natural pozzolans such as tuff, trass and volcanic ash, calcined clays, burnt shale, rice husk ash, natural and synthetic zeolites, and mixtures thereof.

The slag can be either industrial slag, i.e. waste products from industrial processes, or else synthetic slag. The latter can be advantageous because industrial slag is not always available in consistent quantity and quality.

Blast furnace slag (BFS) is a waste product of the glass furnace process. Other materials are granulated blast furnace slag (GBFS) and ground granulated blast furnace slag (GGBFS), which is granulated blast furnace slag that has been finely pulverized. Ground granulated blast furnace slag varies in terms of grinding fineness and grain size distribution, which depends on origin and treatment method, and grinding fineness influences reactivity here. The Blaine value is used as parameter for grinding fineness, and typically has an order of magnitude of from 200 to 1000 $m^2 kg^{-1}$, preferably from 250 to 700 $m^2 kg^{-1}$, more preferably from 300 to 500 $m^2 kg^{-1}$. Finer milling gives higher reactivity.

Herein, the term "blast furnace slag" is intended to comprise materials resulting from all of the levels of treatment, milling, and quality mentioned (i.e. BFS, GBFS and GGBFS). Blast furnace slag generally comprises from 30 to 45 wt.-% of CaO, about 4 to 17 wt.-% of MgO, about 30 to 45 wt.-% of $SiO_2$ and about 5 to 15 wt.-% of $Al_2O_3$, typically about 40 wt.-% of CaO, about 10 wt.-% of MgO, about 35 wt.-% of $SiO_2$ and about 12 wt.-% of $Al_2O_3$.

Electrothermal phosphorous slag is a waste product of electrothermal phosphorous production. It is less reactive than blast furnace slag and comprises about 45 to 50 wt.-% of CaO, about 0.5 to 3 wt.-% of MgO, about 38 to 43 wt.-% of $SiO_2$, about 2 to 5 wt.-% of $Al_2O_3$ and about 0.2 to 3 wt.-% of $Fe_2O_3$, and also fluoride and phosphate. Steel slag is a waste product of various steel production processes with greatly varying composition.

Amorphous silica is preferably an X ray-amorphous silica, i.e. a silica for which the powder diffraction method reveals no crystallinity. The content of $SiO_2$ in the amorphous silica is advantageously at least 80 wt.-%, preferably at least 85 wt.-%, more preferably at least 90 wt.-%.

Precipitated silica is obtained on an industrial scale by way of precipitating processes starting from water glass. Precipitated silica from some production processes is also called silica gel.

Fumed silica is produced via reaction of chlorosilanes, for example silicon tetrachloride, in a hydrogen/oxygen flame. Fumed silica is an amorphous $SiO_2$ powder of particle diameter from 5 to 50 nm with specific surface area of from 50 to 600 $m^2 g^{-1}$.

Microsilica is a by-product of silicon production or ferrosilicon production, and likewise consists mostly of amorphous $SiO_2$ powder. The particles have diameters of the order of magnitude of 0.1 $\mu$m . Specific surface area is of the order of magnitude of from 15 to 30 $m^2 g^{-1}$.

Metakaolin is produced when kaolin is dehydrated. Whereas at from 100 to 200 °C, kaolin releases physically bound water, at from 500 to 800 °C, a dehydroxylation takes place, with collapse of the lattice structure and formation of metakaolin ($Al_2Si_2O_7$). Accordingly, pure metakaolin comprises about 54 wt.-% of $SiO_2$ and about 46 wt.-% of $Al_2O_3$.

Fly ash is produced inter alia during the combustion of coal in power stations. According to WO 08/012438, class C fly ash (brown-coal fly ash) comprises about 10 wt.-% of CaO, whereas class F fly ash (hard-coal fly ash) comprises less than 8 wt.-%, preferably less than 4 wt.-%, more preferably about 2 wt.-% of CaO.

In case the construction composition contains a low amount of hydraulic binder (e.g. $\leq$ 10%), an alkaline activator can be further added to promote strength development. Alkaline activators are preferably used in the binder system. For example, such alkaline activators are aqueous solutions of alkali metal fluorides, alkali metal hydroxides, alkali metal aluminates or alkali metal silicates, such as soluble waterglass, and mixtures thereof.

The construction composition may further comprise a filler material such as sand and/or coarse aggregates. Herein, the term "sand" denotes aggregates having a diameter of up to 5 mm; and the term "coarse aggregates" denotes aggregates with a diameter of more than 5 to 30 mm. For example, such "filler materials" denote silica, quartz, sand, crushed marble, glass spheres, granite, basalt, limestone, sandstone, calcite, marble, serpentine, travertine, dolomite, feldspar, gneiss, alluvial sands, any other durable aggregate, and mixtures thereof. In particular, the fillers do not work as a binder. Suitably, the construction composition comprises the filler material in an amount of 1 to 12 vol.-%, preferably 2 to 6 vol.-%, relative to the total amount of the construction composition.

For example, the cementitious composition may be a flowable cementitious composition. Such "flowable cementitious compositions" denote a cement based composition which may be cast without compaction and vibration. Typical examples of such flowable cementitious compositions are self-levelling floorings that can be poured on uneven grounds to provide by themselves an even surface, where, for example, tiles or parquet can be laid. Self-levelling floorings contain special dispersants or superplasticizers that are essential to impart perfect fluidity and self-healing properties without excessively increasing the need of water.

Further typical examples of flowable cementitious compositions are selected from flowable concrete, self-compacting concrete, self-consolidating concrete (SCC), readymix concrete, underwater concrete and cement based flowing screed.

Flowable concrete is a non-segregating concrete which may be spread into place, fill formwork and encapsulate reinforcements without any mechanical vibration.

The construction composition may additionally comprise at least one retarder and/or accelerator.

It is important to maintain the construction composition in a pumpable slurry state until it is placed in a desired location. For this purpose, a cement retarder, which is sometimes referred to as a set retarder or simply a retarder, can be used in the construction composition. A retarder retards the setting process and helps to provide an adequate pumping time to place the cement slurry. Compositions commonly used in cementing operations for delaying the set time of a cement composition include lignosulfates, hydroxycarboxylic acids (e.g., gluconic acid, citric acid and tartaric acid), sucrose, phosphonic acid derivatives, synthetic polymers (e.g., copolymers of 2-acrylamido-2-methylpropane sulfonic acid ("AMPS")), borate salts, and combinations thereof.

Suitably, the accelerator as conventionally used, e.g., in repair mortars and self-levelling underlayments, may be selected from lithium salts, in particular lithium carbonate or lithium sulfate.

The hydrocolloid particle suspension according to the invention can be prepared by mixing the ingredients in any desired order. For example, the hydrocolloid particle suspension is obtained by

- adding a structuring agent to an aqueous solution of a stabilizing additive containing a polyoxyalkylene moiety of 3 to 150 consecutive oxyalkylene units, and blending to obtain a homogeneous mixture,
- adding hydrocolloid powder particle to the homogeneous mixture and agitating to uniformly distribute the hydrocolloid particles.

Examples

The present invention is described in detail below with reference to the examples that follow.

Methods

Herein, the weight-average molecular weight values of the comb polymers were determined by gel permeation chromatography (GPC). As a stationary phase, a sequence of columns OH-Pak SB-G, OH-Pak SB 804 HQ and OH-Pak SB 802.5 HQ (available from Shodex) was used. As a mobile phase, an eluent of 80 vol.-% of an aqueous solution of $HCO_2NH_4$ (0.05 mol/L) and 20 vol.-% of methanol was used. The injection volume was 100 μL at a flow rate of 0.5 mL/min. The molecular weight calibration was performed with polystyrene sulfonate standards for UV detectors (for polycondensates) and polyethylene oxide standards for RI detectors (for polycarboxylate ethers; both standards available from PSS Polymer Standards Service). The weight-average molecular weight determination of the polymers was performed by UV-detection at 254 nm.

Herein, the presence of sedimentation of the hydrocolloid particle suspension is determined by keeping a freshly-prepared hydrocolloid particle suspension in a graduated measuring cylinder. In the event that a clear supernatant has formed, its volume $V_{sn}$ is determined. The percentage of sedimentation is calculated according to the following formula, wherein $V_{total}$ denotes the total volume of the hydrocolloid particle suspension in the graduated measuring cylinder:

$$(V_{sn} : V_{total}) \cdot 100\%$$

Herein, the presence of floating-up of the hydrocolloid particle suspension is determined as described above, see sedimentation. In the event that a clear infranatant has formed, its volume $V_{in}$ is determined. The percentage of floating-up is calculated according to the following formula, wherein $V_{total}$ denotes the total volume of the hydrocolloid particle suspension in the graduated measuring cylinder:

$$(V_{in} : V_{total}) \cdot 100\%$$

Herein, the viscosity of the hydrocolloid particle suspension was determined using a Brookfield viscosimeter with spindle LVS61 at 20 °C and 12 rpm.

Materials

Hydrocolloid particle suspensions according to table 1 (all wt.-% expressed as active substance) were prepared according to the following procedure: The comb polymer and/or the polyoxyethylene glycol and/or β-naphthalene sulfonate-formaldehyde condensate is placed in a beaker and stirred at the stirring rate as indicated in table 1 for 5 min. Subsequently, the nanocellulose, the defoaming agent and the biocide as indicated in table 1 are slowly added over a period of 5 min and the mixture is stirred until a homogeneous mixture is obtained. Then, to said homogeneous mixture, diutan gum powder is slowly added over a period of 5 min and the mixture is again stirred until a homogeneous mixture is obtained. The homogenous mixture is then transferred to a graduated measuring cylinder and the viscosity is determined. The stability (sedimentation and floating-up) and viscosity is monitored frequently.

Table 1. Viscosities and two-month-stability of hydrocolloid particle suspensions.

| | # 1 | #2 | #3 | #4 | #5 | # 6* | # 7* | #8 | #9 |
|---|---|---|---|---|---|---|---|---|---|
| Polycarboxylate ether [1] [wt.-%] | 41.5 | 41.7 | 41.1 | 41.7 | 0 | 0 | 0 | 0 | 41.0 |
| Polyarylether [2] [wt.-%] | 0 | 0 | 0 | 0 | 0 | 0 | 0 | 41.7 | 0 |
| PEG [3] [wt.-%] | 0 | 0 | 0 | 0 | 88.5 | 0 | 0 | 0 | 0 |
| BNS [4] [wt.-%] | 0 | 0 | 0 | 0 | 0 | 37.2 | 0 | 0 | 0 |
| SMF [5] [wt.-%] | 0 | 0 | 0 | 0 | 0 | 0 | 40.2 | 0 | 0 |

(continued)

| | # 1 | #2 | #3 | #4 | #5 | # 6* | # 7* | #8 | #9 |
|---|---|---|---|---|---|---|---|---|---|
| Cellulose structuring agent [wt.-%] | 0.063 [6] | 0 | 0.064 [6] | 0.032 [6] | 0.066 [6] | 0.064 [7] | 0.064 [7] | 0.032 [7] | 0.032 [7] |
| Defoaming agent [8] [wt.-%] | 0 | 2.0 | 0.5 | 3.3 | 3.3 | 1.0 | 3.3 | 3.3 | 3.3 |
| Biocide [9] [wt.-%] | 0 | 0.15 | 0.15 | 0.15 | 0.15 | 0.15 | 0.15 | 0.15 | 0.15 |
| Diutan gum [10] [wt.-%] | 3.1 | 3.1 | 3.1 | 1.0 | 1.5 | 1.5 | 1.5 | 1.5 | 0 |
| Cellulose ether [11] [wt.-%] | 0 | 0 | 0 | 0 | 0 | 0 | 0 | 0 | 3.15 |
| Water [12] [wt.-%] | 55.3 | 53.2 | 55.1 | 53.8 | 6.5 | 60.1 | 54.8 | 53.3 | 52.4 |
| Stirring rate [13] [rpm] | 500 | 500 | 500 | 300 | 300 | 8000 | 300 | 300 | 300 |
| Initial viscosity [14] [mPa·s] | 3400 | 430 | 3100 | 885 | 360 | 1000 | 1450 | 405 | 1230 |
| Stability after 2 months<br>Floating-up [%]<br>Sedimentation [%] | <br>27<br>0 | <br>0<br>80 | <br>0<br>0 | <br>0<br>0 | <br>0<br>0 | <br>18<br>0 | <br>20<br>0 | <br>0<br>0 | <br>0<br>0 |

[1] Comb copolymer (46% aqueous solution) containing acrylic acid and a PEG-macromonomer with an average molecular weight of 2400 g/mol and a charge density of 1 meq/g; available from Master Builders Solutions Deutschland GmbH.
[2] (Phenol-PEG 2000)-formaldehyde-phenoxyethanolphosphat-polycondensate (48% aqueous solution) with a charge density of 0.9 meq/g; available from Master Builders Solutions Deutschland GmbH.
[3] Polyoxyethylene glycol (PEG-600); available from Bernd Kraft GmbH
[4] β-Naphthatene sulfonate-formaldehyde (BNS) condensate (41% aqueous solution); available from Bozzetto Group
[5] Sulfonated melamin-formaldehyde (SMF) condensate (45% aqueous solution); available from BASF Construction Additives GmbH
[6] CELLULON ® R-88; available from CP Kelco
[7] CELLULON ® L-88; available from CP Kelco
[8] Polyethylenglykol-polypropylenglykol blockcopolymer; available from Dow Chemicals
[9] Acticide MBS; available from THOR GmbH
[10] Kelco-Crete DG-F; available from CP Kelco
[11] Hydroxyethylcellulose
[12] Including water introduced by any of [1], [2], [4], [5], [6] and [7]
[13] stirring rate during the formulation process of the hydrocolloid particle suspensions
[14] viscosity of the hydrocolloid particle suspensions determined at 20 °C (Brookfield viscosimeter with spindle LVS61, 12 rpm). * comparative example

The invention allows for preparing stable hydrocolloid particle suspensions. Therefore, it is possible to obtain formulations which can be properly handled and dosed in the respective areas of application. Using the hydrocolloid particle suspensions allows for a substantially homogenous density profile of the construction composition.

## Claims

**1.** Hydrocolloid particle suspension, comprising

a concentration of at least 0.5 g/100 g of hydrocolloid particles, and
a stabilizing additive containing at least one polyoxyalkylene moiety of 3 to 150 consecutive oxyalkylene units, wherein the at least one polyoxyalkylene moiety comprises at least 25 wt.-% of oxyethylene moieties, based on the total oxyalkylene moieties comprised in the stabilizing additive,
wherein the suspension contains less than 80 wt.-% of water, and
wherein the suspension is useful as rheological modifier for cementitious applications.

**2.** Suspension according to claim 1, wherein the hydrocolloid is selected from diutan gum, welan gum, xanthan gum, rhamsan gum, cellulose ethers, and mixtures thereof.

**3.** Suspension according to claim 2, wherein the cellulose ether is selected from methylcellulose, hydroxyethylcellulose, hydroxypropylmethylcellulose, carboxymethylcellulose, carboxymethylhydroxyethylcellulose, methylhydroxyethylcellulose, hydroxymethylethylcellulose, ethylcellulose, hydroxyethylpropylcellulose.

**4.** Suspension according to claim 2, wherein the hydrocolloid is diutan gum.

**5.** Suspension according to any one of the preceding claims, wherein the stabilizing additive is a polyoxyalkylene glycol, in particular polyoxyethylene glycol.

**6.** Suspension according to any one of claims 1 to 4, wherein the stabilizing additive is a comb polymer having a carbon-chain backbone with anionic and/or anionogenic groups and polyoxyalkylene side chains.

**7.** Suspension according to claim 6, wherein the proportion by weight of polyoxyalkylene moieties in the comb polymer is at least 55 wt.-%.

**8.** Suspension according to claims 6 or 7, wherein the comb polymer has a charge density of 0.3 to 3.0 meq/g, preferably 0.7 to 2.0 meq/g, more preferably 0.8 to 1.2 meq/g, assuming all anionogenic groups being fully ionized.

**9.** Suspension according to any one of claims 6 to 8, wherein the stabilizing additive is a comb polymer comprising

- structural units selected from formulae (Ia), (Ib), (Ic), and/or (Id), and
- structural units selected from formulae (IIa), (IIb), (IIc) and/or (IId):

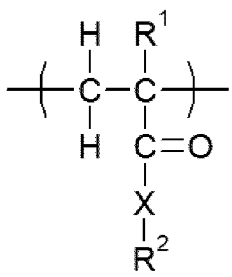

(Ia)

wherein

$R^1$ is H, $C_1$-$C_4$ alkyl, $CH_2COOH$ or $CH_2CO$-X-$R^{3A}$, preferably H or methyl;
X is NH-($C_{n1}H_{2n1}$) or O-($C_{n1}H_{2n1}$) with n1 = 1, 2, 3 or 4, the nitrogen atom or the oxygen atom being bonded to the CO group;
$R^2$ is OM, $PO_3M_2$, or O-$PO_3M_2$; or
X is a chemical bond and $R^2$ is OM;
$R^{3A}$ is $PO_3M_2$, or O-$PO_3M_2$;

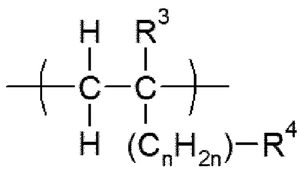

(Ib)

wherein

$R^3$ is H or $C_1$-$C_4$ alkyl, preferably H or methyl;
n is 0, 1, 2, 3 or 4;
$R^4$ is $PO_3M_2$, or O-$PO_3M_2$;

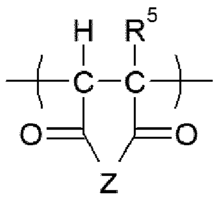

(Ic)

wherein

$R^5$ is H or $C_1$-$C_4$ alkyl, preferably H;
Z is O or $NR^7$;
$R^7$ is H, $(C_{n1}H_{2n1})$-OH, $(C_{n1}H_{2n1})$-$PO_3M_2$, $(C_{n1}H_{2n1})$-$OPO_3M_2$, $(C_6H_4)$-$PO_3M_2$, or $(C_6H_4)$-$OPO_3M_2$, and
n1 is 1, 2, 3 or 4;

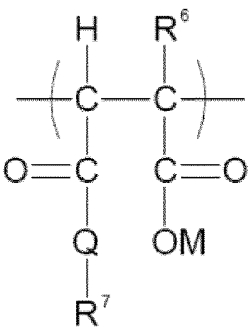

(Id)

wherein

$R^6$ is H or $C_1$-$C_4$ alkyl, preferably H;
Q is $NR^7$ or O;
$R^7$ is H, $(C_{n1}H_{2n1})$-OH, $(C_{n1}H_{2n1})$-$PO_3M_2$, $(C_{n1}H_{2n1})$-$OPO_3M_2$, $(C_6H_4)$-$PO_3M_2$, or $(C_6H_4)$-$OPO_3M_2$,
n1 is 1, 2, 3 or 4; and

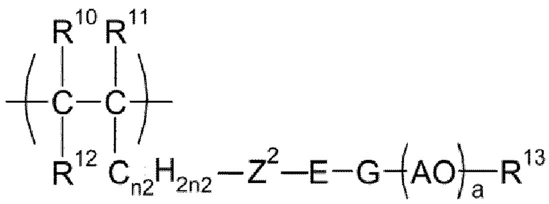

(IIa)

wherein

$R^{10}$, $R^{11}$ and $R^{12}$ independently of one another are H or $C_1$-$C_4$ alkyl, preferably H or methyl;
$Z^2$ is O or S;
E is $C_2$-$C_6$ alkylene, cyclohexylene, $CH_2$-$C_6H_{10}$, 1,2-phenylene, 1,3-phenylene or 1,4-phenylene;
G is O, NH or CO-NH; or
E and G together are a chemical bond;
A is $C_2$-$C_5$ alkylene or $CH_2CH(C_6H_5)$, preferably $C_2$-$C_3$ alkylene;
n2 is 0, 1, 2, 3, 4 or 5;
a is an integer from 3 to 150;
$R^{13}$ is H, an unbranched or branched $C_1$-$C_4$ alkyl group, $CO-NH_2$ or $COCH_3$;

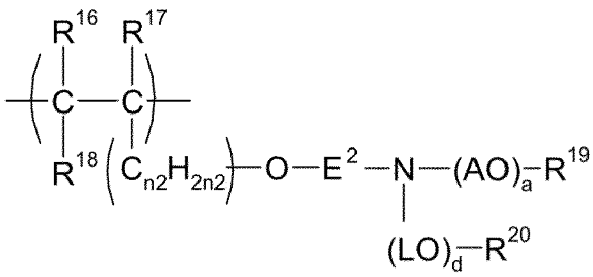

(IIb)

wherein

R16, $R^{17}$ and $R^{18}$ independently of one another are H or $C_1$-$C_4$ alkyl, preferably H;
$E^2$ is $C_2$-$C_6$ alkylene, cyclohexylene, $CH_2$-$C_6H_{10}$, 1,2-phenylene, 1,3-phenylene, or 1,4-phenylene, or is a chemical bond;
A is $C_2$-$C_5$ alkylene or $CH_2CH(C_6H_5)$, preferably $C_2$-$C_3$ alkylene;
n2 is 0, 1, 2, 3, 4 or 5;
L is $C_2$-$C_5$ alkylene or $CH_2CH(C_6H_5)$, preferably $C_2$-$C_3$ alkylene;
a is an integer from 3 to 150;
d is an integer from 3 to 150;
$R^{19}$ is H or $C_1$-$C_4$ alkyl; and
$R^{20}$ is H or $C_1$-$C_4$ alkyl;

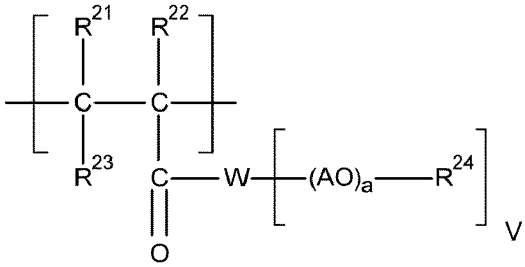

(IIc)

wherein

$R^{21}$, $R^{22}$ and $R^{23}$ independently are H or $C_1$-$C_4$ alkyl, preferably H;
W is O, $NR^{25}$, or is N;
V is 1 ifW = O or$NR^{25}$, andis2 ifW = N;
A is $C_2$-$C_5$ alkylene or $CH_2CH(C_6H_5)$, preferably $C_2$-$C_3$ alkylene;
a is an integer from 3 to 150;
$R^{24}$ is H or $C_1$-$C_4$ alkyl;
$R^{25}$ is H or $C_1$-$C_4$ alkyl;

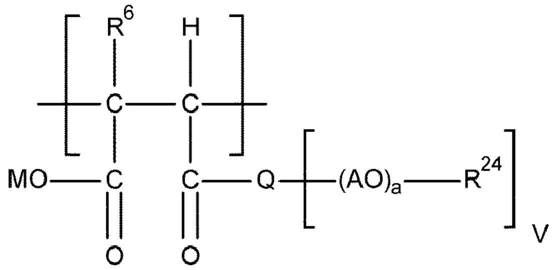

(IId)

wherein

$R^6$ is H or $C_1$-$C_4$ alkyl, preferably H;
Q is $NR^{10}$, N or O;
V is 1 if Q = O or $NR^{10}$ and is 2 if Q = N;
$R^{10}$ is H or $C_1$-$C_4$ alkyl;
$R^{24}$ is H or $C_1$-$C_4$ alkyl;
A is $C_2$-$C_5$ alkylene or $CH_2CH(C_6H_5)$, preferably $C_2$-$C_3$ alkylene; and
a is an integer from 3 to 150;
where each M independently is H or a cation equivalent.

**10.** Suspension according to any one of the preceding claims, additionally containing a structuring agent.

**11.** Suspension according to claim 10, wherein the structuring agent is a cellulose insoluble fiber selected from the group of microfibrillated cellulose or nanocellulose.

**12.** Suspension according to any one of the preceding claims, additionally containing a defoaming agent.

**13.** Suspension according to claim 12, wherein the defoaming agent is selected from polyoxyalkylene-based defoaming agents, phosphoric esters and silicon-based defoaming agents.

**14.** Suspension according to any one of the preceding claims, additionally containing a biocide.

**15.** Suspension according to any one of the preceding claims, exhibiting no sedimentation and/or floating-up upon storage for 2 months.

**16.** Use of a suspension according to any one of the preceding claims as rheological modifier, preferably as viscosity-modifying agent, more preferably as viscosity-enhancing agent for cementitious applications.

Europäisches Patentamt
European Patent Office
Office européen des brevets

# EUROPEAN SEARCH REPORT

Application Number
EP 21 21 3767

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/107149 A1 (BAUMANN ROBERT [CH] ET AL) 20 April 2017 (2017-04-20) | 1-10, 12-16 | INV. C04B40/00 |
| A | * the whole document * | 11 | |
| X | US 2004/072939 A1 (CORNMAN CHARLES R [US] ET AL) 15 April 2004 (2004-04-15) | 1-4, 6-10,12, 13,15,16 | |
| A | * paragraphs [0012] - [0041] * <br> * example 1 * | 11 | |
| X | US 2004/259983 A1 (OKAZAWA SATOSHI [JP] ET AL) 23 December 2004 (2004-12-23) | 1-3, 6-10, 12-16 | |
| A | * paragraphs [0032] - [0046] * | 11 | |
| X | US 2011/046270 A1 (KOYATA HIDEO [JP] ET AL) 24 February 2011 (2011-02-24) | 1,2,4, 6-10, 14-16 | |
| A | * paragraphs [0015] - [0053] * | 11 | |
| X | US 6 800 129 B2 (GRACE W R & CO [US]) 5 October 2004 (2004-10-05) | 1-9, 14-16 | TECHNICAL FIELDS SEARCHED (IPC) |
| A | * paragraphs [0008] - [0056] * | 11 | C04B |

The present search report has been drawn up for all claims

1

| Place of search | Date of completion of the search | Examiner |
|---|---|---|
| Munich | 18 May 2022 | Gattinger, Irene |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 21 21 3767

This annex lists the patent family members relating to the patent documents cited in the above-mentioned European search report. The members are as contained in the European Patent Office EDP file on
The European Patent Office is in no way liable for these particulars which are merely given for the purpose of information.

18-05-2022

| Patent document cited in search report | Publication date | Patent family member(s) | Publication date |
|---|---|---|---|
| US 2017107149 A1 | 20-04-2017 | CN 106132898 A | 16-11-2016 |
| | | EP 3122696 A1 | 01-02-2017 |
| | | JP 2017512854 A | 25-05-2017 |
| | | US 2017107149 A1 | 20-04-2017 |
| | | WO 2015148946 A1 | 01-10-2015 |
| US 2004072939 A1 | 15-04-2004 | NONE | |
| US 2004259983 A1 | 23-12-2004 | CA 2460517 A1 | 27-03-2003 |
| | | EP 1426349 A1 | 09-06-2004 |
| | | JP 4096192 B2 | 04-06-2008 |
| | | JP 2008137889 A | 19-06-2008 |
| | | JP WO2003024884 A1 | 24-12-2004 |
| | | US 2004259983 A1 | 23-12-2004 |
| | | US 2006032409 A1 | 16-02-2006 |
| | | US 2006124034 A1 | 15-06-2006 |
| | | WO 03024884 A1 | 27-03-2003 |
| US 2011046270 A1 | 24-02-2011 | JP 5443338 B2 | 19-03-2014 |
| | | JP WO2009131240 A1 | 25-08-2011 |
| | | US 2011046270 A1 | 24-02-2011 |
| | | WO 2009131240 A1 | 29-10-2009 |
| US 6800129 B2 | 05-10-2004 | BR PI0406816 A | 27-12-2005 |
| | | CN 1745048 A | 08-03-2006 |
| | | EP 1587768 A2 | 26-10-2005 |
| | | HK 1087686 A1 | 20-10-2006 |
| | | KR 20060014363 A | 15-02-2006 |
| | | MX PA05007518 A | 21-09-2005 |
| | | TR 200502976 T2 | 21-09-2005 |
| | | US 2004149172 A1 | 05-08-2004 |
| | | WO 2004069762 A2 | 19-08-2004 |
| | | ZA 200506084 B | 26-04-2006 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 6117226 A
- WO 9408913 A
- US 9012589 B
- EP 0894811 A
- EP 1851256 A
- EP 2463314 A
- EP 0753488 A
- WO 08012438 A


### Non-patent literature cited in the description


- *CHEMICAL ABSTRACTS,* 96949-22-3
- *CHEMICAL ABSTRACTS,* 125005-87-0